# EUROPÄISCHE PATENTSCHRIFT

(11) **EP 0 845 638 B1**
(45) Veröffentlichungstag und Bekanntmachung des Hinweises auf die Patenterteilung: **20.10.2004**
(21) Anmeldenummer: 97120907.7
(22) Anmeldetag: 28.11.1997
(51) Int. Cl.: F23Q 7/00, F23N 5/14

(54) **Zündvorrichtung für ein brennstoffbetriebenes Heizgerät**
Ignition system for a fuel fired heater
Dispositif d'allumage pour appareil de chauffage à combustible

(30) Priorität: 29.11.1996 DE 19649474
(43) Veröffentlichungstag der Anmeldung: 03.06.1998
(73) Patentinhaber: WEBASTO THERMOSYSTEME GmbH, D-82131 Stockdorf (DE)
(72) Erfinder: Widemann, Fritz, 81241 München (DE)
(74) Vertreter: Wiese, Gerhard

(56) Entgegenhaltungen:
- DE-C- 4 015 097
- DE-C- 4 405 315

## Beschreibung

Die Erfindung betrifft eine Zündvorrichtung für ein brennstoffbetriebenes Heizgerät, insbesondere Fahrzeugzusatzheizgerät, mit zumindest einem Glühstift, einer Einrichtung, welche den Glühstift bei variablen Bordspannungen mit einer konstanten Effektivspannung versorgt, beispielsweise einer getakteten Transistorendstufe und einer Einrichtung zum Messen des Glühstift-Widerstands in den Taktpausen.

Der Glühstift einer derartigen Zündvorrichtung wird üblicherweise unabhängig von der Versorgungsspannung der Zündvorrichtung entsprechend dem Zustand des Brenners mit einer Effektivspannung versorgt, die aus der veränderlichen Bordspannung durch Ändern eines Ein-Ausschaltverhältnisses bzw. durch Takten erzeugt wird. Durch Absenken des Pegels dieser Effektivspannung läßt sich beispielsweise die sogenannte Flammenrückwärme, d.h. diejenige Wärme ausgleichen, die auf den Glühstift bei Vorhandensein einer Flamme rückwirkt. Problematisch bei dieser bisherigen Ansteuerung des Glühstift ist, daß das tatsächliche Maß der Glühstiftbelastung nicht bekannt ist, weshalb bei der Ansteuerung des Glühstifts mit Sicherheitsreserven gearbeitet werden muß, um sein Durchbrennen zu verhindern. Dies hat zur Folge, daß die beim Betrieb des Glühstifts zulässigen Temperaturen nicht voll ausgenützt werden.

Eine Zündvorrichtung der eingangs genannten Art ist beispielsweise aus der DE 40 15 097 C1 bekannt. Bei dieser bekannten Zündvorrichtung erfolgt die Flammüberwachung ohne zusätzliches Flammwächterbauteil ausschließlich mit Hilfe der Zündvorrichtung dadurch, daß während der Glühphasen bzw. der Taktpausen der an den Glühstift angelegten getakteten Spannung der Widerstand des Glühstifts ermittelt und zur Flammüberwachung genutzt wird. Auch diese bekannte Zündvorrichtung ist mit der vorstehend angesprochenen Unsicherheit bezüglich der Glühstiftbelastung behaftet.

Eine Aufgabe der vorliegenden Erfindung besteht darin, eine Zündvorrichtung der eingangs genannten Art zu schaffen, die eine optimale Belastung des Glühstifts gegebenenfalls bis nahe an die Belastungsgrenze erlaubt, ohne daß dieser dadurch beschädigt wird.

Gelöst wird diese Aufgabe durch die kennzeichnenden Merkmale des Patentanspruchs 1. Vorteilhafte Weiterbildungen der Erfindung sind in den Unteransprüchen angegeben.

Mit anderen Worten schlägt die Erfindung eine Einregelung des Glühstift-Widerstandswerts auf einen vorgegebenen konstanten bzw. einen von verschiedenen Bedingungen abhängigen Wert vor. Dadurch wird einerseits erreicht, daß sowohl bei Fehlen der Brennluft, dem sogenannten Verdämmen, als auch bei unterschiedlich hoher Flammenrückwärme der Glühstift nicht überlastet werden kann, während der Glühstift andererseits ohne Rücksicht auf Sicherheitsreserven wie beim Stand der Technik optimal ausgelastet, d.h. gegebenenfalls auch maximal zulässiger Temperatur betrieben werden kann.

Die erfindungsgemäß vorgesehene Regelung des Glühstift-Widerstands auf einen vorgegebenen konstanten Wert erbringt außerdem den Vorteil, daß der Glühstift in praxisgerechter Weise bei kalter Umgebungstemperatur auf eine höhere Temperatur aufheizt als bei warmer Umgebungstemperatur.

Der bevorzugt aus wenigstens einer in einer Keramikmasse eingebetteten Glühwendel aufgebaute bzw. aus einer in Dickschichttechnik bedruckten Keramik bestehende Glühstift hat bevorzugt einen Widerstand mit PTC-Verhalten.

Bevorzugt wird als Regelsignal zur Einstellung des Spannungssignals eine am Glühstift abgegriffene Spannung verwendet, die an diesem aufgrund eines konstanten Stroms abfällt, der den Glühstift durchfließt und von der Glühstift-Widerstands-Meßeinrichtung erzeugt wird.

Die erfindungsgemäße Einregelung des Glühstift-Widerstands auf einen vorgegebenen konstanten Wert erlaubt auch in einfacher Weise die Realisierung einer Sicherheitsabschaltung für die Zündvorrichtung, indem eine eine bestimmte Schwelle überschreitende Abweichung dieses konstanten Werts zur Abschaltung der Zündvorrichtung verwendet wird.

Ein typischer Wert für den Glühstift-Widerstand beträgt 1,3 bis 1,35 Ohm bei einer 12V-Spannungsversorgung entsprechend einer Temperatur des Glühstifts von etwa 1.050°C, als optimale Arbeits- bzw. Zündtemperatur des Glühstifts zwischen einem Minimalwert von etwa 1.000°C und einem Maximalwert von etwa 1.150°C. Vorteilhafterweise wird der erfindungsgemäß einzustellende konstante Glühstift-Widerstandswert bei einer programmierbaren Zündvorrichtung als einer der Prozeß-Parameter in einem Speicher abgelegt.

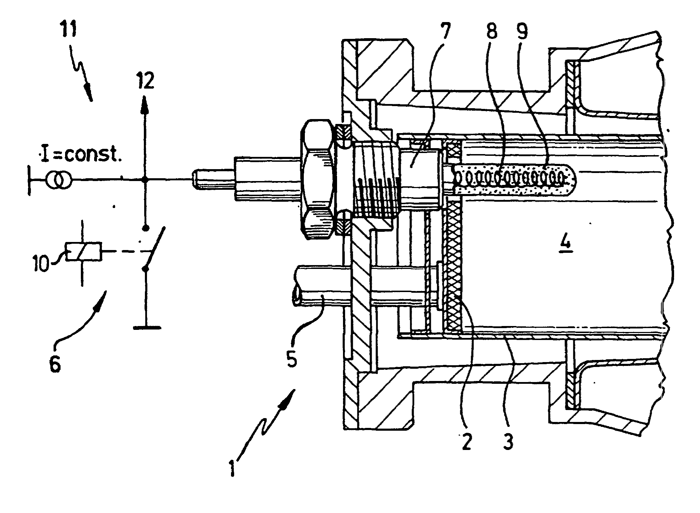

Nachfolgend wird die Erfindung anhand der Zeichnung beispielhaft näher erläutert; die einzige Figur der Zeichnung zeigt eine schematische Ansicht einer bevorzugten Ausführungsorm einer Zündvorrichtung für ein brennstoffbetriebenes Heizgerät.

Zu Verdeutlichung der Erfindung ist in der einzigen Figur nur ein Brennerbereich des Heizgeräts gezeigt. Bei dem dargestellten Beispiel ist der Brenner von einem Verdampfungsbrenner 1 gebildet, der einen saugfähigen Körper 2, wie etwa ein Vlies auf einem Träger aufweist, der in einem Brennrohr 3 angeordnet ist, das die Brennkammer 4 begrenzt. Über eine Brennstoffzuleitung 5 wird dem Verdampfungsbrenner 1 flüssiger Brennstoff zugeführt. Die Zündvorrichtung weist eine Stabglühkerze bzw. einen Glühstift 7 auf, die bzw. der den Träger und den saugfähigen Körper 2 des Verdampfungsbrenner 1 durchsetzt und in die Brennkammer 4 ragt. Der Glühstift 7 hat eine Glühwendel 8, die vorzugsweise aus Wolfram besteht und in eine Keramikmasse 9 eingebettet ist.

Außerdem weist die Zündvorrichtung eine Einrichtung 6 zum Anlegen einer konstant getakteten, pegelvariablen Spannung an den Glühstift 7 auf, die in schematischer Weise dargestellt ist und beispielhaft ein Glühtaktrelais 10 (oder alternativ einen Transistor) aufweist, das eine vorbestimmte Spannung taktweise an die Glühwendel 8 des Glühstifts 7 anlegt, so daß dieser auf eine für die Zündung des am Verdampfungsbrenner 1 aufbereiteten Luft-/Brennstoffgemischs geeignete Temperatur erwärmt wird, typischerweise auf 1.050°C Während der Glühphasen, d.h. während der Taktpausen des Glühtaktrelais 10 wird ein konstanter Strom I von einer Einrichtung 11 zum Messen des Glühstift-Widerstands an die Glühwendel 8 des Glühstifts 7 angelegt. Das dabei in Gestalt einer Spannung von der Glühwendel 8 abgegriffene Meßsignal wird an eine nicht weiter dargestellte, da an sich bekannte Auswerteschaltung 12 angelegt, die den Meßwert mit einem vorgegebenen Sollwert vergleicht, der einem festgelegten Glühstift-Widerstand entspricht, und das Differenzsignal wird verwendet, um den Pegel der Spannungsardegeeinrichtung 6 so zu regeln, daß der Glühstift-Widerstand aufgrund seiner durch die Spannung erzeugten Glühtemperatur einen vorgegebenen konstanten Wert einnimmt.

Dadurch wird erreicht, daß der Glühstift 7 stets mit einer Glühtemperatur betrieben wird, die beliebig nahe an seiner Maximaltemperatur liegen kann, ohne daß der Glühstift aufgrund einer zu hohen Glühtemperatur überlastet wird. Mit anderen Worten wird der Glühstift 7 durch Regeln auf einen externe Einflüsse, wie Flammenrückwärme berücksichtigenden konstanten Widerstandswert in einem optimalen Arbeitsbereich betrieben.

## Patentansprüche

1. Zündvorrichtung für ein brennstoffbetriebenes Heizgerät, insbesondere Fahrzeugzusatzheizgerät, mit zumindest einem Glühstift (7), einer Einrichtung (6), welche den Glühstift bei variablen Bordspannungen mit einer konstanten Effektivspannung versorgt, die durch Takten erzeugt wird, beispielsweise einer getakteten Transistorendstufe und einer Einrichtung (11, 12) zum Messen des Gtühstift-Widerstands in den Taktpausen, **gekennzeichnet durch** eine Regelung des Pegels der an den Glühstift (7) getaktet angelegten Spannung **durch** das Meßsignal der Glühstift-Widerstands-Meßeinrichtung (11, 12), die so ausgebildet ist, daß der Glühstift-Widerstand stets einen vorgegebenen konstanten Wert bzw. ein von verschiedenen Bedingungen, z.B. der Umgebungstemperatur, abhängigen Wert einnimmt.

2. Zündvorrichtung nach Anspruch 1, **dadurch gekennzeichnet, daß** der Glühstift (7) wenigstens eine, vor allem in einer Keramikmasse eingebettete Glühwendel (8) aufweist.

3. Zündvorrichtung nach Anspruch 1, **dadurch gekennzeichnet, daß** der Glühstift (7) aus einer in Dickschichttechnik bedruckten Keramik besteht.

4. Zündvorrichtung nach Anspruch 1, 2 oder 3, **dadurch gekennzeichnet, daß** das Regelsignal zur Einstellung des Spannungspegels eine am Glühstift (7) abgegriffene Spannung ist, die am Glühstift (7) aufgrund eines konstanten Stroms abfällt, der, von der Glühstift-Widerstands-Meßeinrichtung (11, 12) erzeugt, den Glühstift (7) durchfließt.

5. Zündvorrichtung nach einem der Ansprüche 1 bis 4, **gekennzeichnet durch** eine Abschaltung der getakteten Spannung bei Erreichen eines vorgegebenen Widerstand-Schwellenwerts.

6. Zündvorrichtung nach einem der Ansprüche 1 bis 5, **dadurch gekennzeichnet, daß** der Glühstift (7) einen Widerstand mit PTC-Verhalten aufweist.

## Claims

1. Ignition device for a fuel-operated heater, in particular an additional motor vehicle heater, having at least one glow pin (7), a device (6) which, under variable on-board voltages, supplies the glow pin with a constant effective voltage, which is generated by clocking, for example a clocked transistor output stage and a device (11, 12) for measuring the glow pin resistance in the clock pauses, **characterized by** regulation of the level of the voltage applied in a clocked manner to the glow pin (7) by means of the measured signal from the glow pin resistance measuring device (11, 12), the regulation being such that the glow pin resistance always assumes a predefined constant value or a value that depends on various conditions, for example the ambient temperature.

2. Ignition device according to Claim 1, **characterized in that** the glow pin (7) has at least one incandescent filament (8) primarily embedded in a ceramic compound.

3. Ignition device according to Claim 1, **characterized in that** the glow pin (7) consists of a ceramic printed using a thick layer technique.

4. Ignition device according to Claim 1, 2 or 3, **characterized in that** the control signal for setting the voltage level is a voltage which is tapped off on the glow pin (7) and which drops across the glow pin (7) on the basis of a constant current which, generated by the glow pin resistance measuring device (11, 12), flows through the glow pin (7).

5. Ignition device according to one of Claims 1 to 4, **characterized by** switching off the clocked voltage when a predefined resistance threshold value is reached.

6. Ignition device according to one of Claims 1 to 5, **characterized in that** the glow pin (7) has a resistance with a PTC response.

## Revendications

1. Dispositif d'allumage pour un appareil de chauffage à combustible, notamment un appareil auxiliaire de chauffage de véhicule, avec au moins un crayon à incandescence (7), avec un équipement (6) qui alimente le crayon à incandescence, en présence de tensions électriques de bord variables, en une tension électrique effective constante qui est produite de manière cadencée, par exemple d'un étage final de transistor à fonctionnement cadencé, et avec un équipement (11, 12) pour mesurer la résistance du crayon à incandescence pendant les pauses du fonctionnement cadencé, **caractérisé par** une régulation du niveau de la tension électrique appliquée de manière cadencée au crayon à incandescence (7) au moyen du signal de mesure de l'équipement (11, 12) de mesure de la résistance du crayon à incandescence, équipement qui est conçu de telle sorte que la résistance du crayon à incandescence prend en permanence une valeur constante prescrite ou prend une valeur fonction de différentes conditions, par exemple de la température ambiante.

2. Dispositif d'allumage selon la revendication 1, **caractérisé en ce que** le crayon à incandescence (7) présente au moins un filament boudiné (8), principalement enrobé dans une masse de matériau céramique.

3. Dispositif d'allumage selon la revendication 1, **caractérisé en ce que** le crayon à incandescence (7) est constitué d'un matériau céramique imprimé en technique à couche épaisse.

4. Dispositif d'allumage selon la revendication 1, 2 ou 3, **caractérisé en ce que** le signal de régulation pour régler le niveau de tension électrique est une tension électrique prélevée au crayon à incandescence (7) qui reste présente au crayon à incandescence (7) sur la base d'un courant électrique constant qui, produit par l'équipement (11, 12) de mesure de la résistance du crayon à incandescence, s'écoule à travers le crayon à incandescence (7).

5. Dispositif d'allumage selon l'une des revendications 1 à 4, **caractérisé par** une désactivation de la tension électrique cadencée à l'atteinte d'une valeur de seuil prescrite de résistance.

6. Dispositif d'allumage selon l'une des revendications 1 à 5, **caractérisé en ce que** le crayon à incandescence (7) présente une résistance à comportement CPT (coefficient positif de température).
